# EUROPEAN PATENT SPECIFICATION

(11) **EP 3 436 785 B1**
(45) Date of publication and mention of the grant of the patent: **19.02.2020**
(21) Application number: 16714845.1
(22) Date of filing: 31.03.2016
(51) Int. Cl.: G01D 4/00, H04L 25/02

(54) **UTILITY METER**
VERBRAUCHSZÄHLER
COMPTEUR

(43) Date of publication of application: 06.02.2019
(73) Proprietor: Danfoss A/S, 6430 Nordborg (DK)
(72) Inventor: JESPERSEN, Lars, 6400 Sønderborg (DK); CARSTENSEN, Morten, 6430 Nordborg (DK)
(74) Representative: Petersen, Frank
(86) International application number: PCT/EP2016/057017
(87) International publication number: WO 2017/167367

(56) References cited:
- WO-A1-2013/079043
- FR-A- 1 175 184
- FR-A3- 2 942 063
- US-A- 3 430 125
- US-A- 4 782 341

## Description

The present invention relates to a utility meter according to the preamble of claim 1.

Such a utility meter is known, for example, from US 4 782 341 A.

A utility company delivering utilities, such like water, gas, electricity, or district heating to customers uses utility meters to determine the delivered quantity of the utility.

Data obtained by the metering section must be transmitted to the outside of the utility meter, for example to a sending equipment with which the data can be sent to the utility company. Such a sending equipment can be, for example, connected to the communication interface or the communication interface can directly send the data to the utility company. In many cases a galvanic isolation is necessary.

Such an electrically isolated external communication is often very restricted in terms of how often communication to and from external equipment can take place. This is because the communication consumes a relatively high amount of power which is a disadvantage if the utility meter uses a battery as energy source. The power consumption will shorten the available battery life time significantly.

The communication path is often implemented with opto couplers where the transmitter LED is driven either statically with pulsating DC (direct current) or dynamically with dual LED's driven through coupling capacitors where only short pulses around the edges are transferred through the opto coupler. Because such a communication path normally runs at relatively low bit rates of 300-9600 bits/s, the associated microcontroller needs to be powered up for a relatively long time where it consumes power. In case of a statically driven LED, the LED consumes a relative high amount of power due to the LED being turned on for relatively long times - especially at low bit rates. In case of the dynamically driven LED this is not the case, but the amount of charge that needs to be transferred per bit is relatively high. In both cases, aging of the opto coupler needs to be taken into account - which further increases the power consumption.

US 3 430 125 A shows an isolating circuit for making electrical measurements which is used to isolate a circuit located between electro-chemical cells and an electrical measuring apparatus, wherein the circuit comprises a transformer for galvanic separation of the electro-chemical cells and the measuring apparatus.

FR 1 175 184 A shows a circuit for transferring data from a measuring location to a frequency meter. The circuit comprises a transfer line which connects a secondary side of a first transformer to a primary side of a second transformer and to a voltage source. The frequency meter is connected to the secondary side of the second transformer.

FR 2 942 063 A3 shows a possibility to connect a portable computer to a measuring equipment by means of a plug in form of RS 232, USB or ethernet connection. A transformer is provided in the computer to protect the computer when a user connects a connector to a 230 V-grid.

WO 2013/079043 A1 shows a flow meter for sanitary fitting which transmits measuring data by means of a radio signal from a sender to a receiver.

The object underlying the invention is to operate a utility meter with low power consumption.

This object is solved with a utility meter as defined in claim 1.
The use of a transformer to provide the galvanic isolation leads to a very low coupling capacitance which is comparable to that of an opto coupler. By transferring data bits inductively the energy associated with each bit transferred can be reduced significantly compared to the energy needed when using an opto coupler. The small amount of transferred energy per bit also promotes high speed. Preferably the primary side is connected to the metering section through a modulator circuit and the secondary side is connected to the communication interface through a demodulator circuit. Usually the data sent from the metering section are in form of a primary input signal in form of a pulse train having pulses and pauses. The complementary signals double the voltage swing to the transformer and hence decreases the necessary drive currents correspondingly.

In a preferred embodiment said primary side is connected to said metering section by means of an input modulator circuit having a symmetrical design.

Such a symmetrical design promotes immunity towards common mode EMC interference.

Preferably said secondary side is connected to said communication interface by means of an output modulator circuit having a symmetrical design. Such a symmetrical design promotes immunity towards common mode EMC interference (Electromagnetic compatibility interference).

In a preferred embodiment said inverter arrangement comprises a first inverter connected to said first terminal of said primary side and to an input of a second inverter which is connected to said second terminal of the primary side. This is a relatively simple way to realize the inverter arrangement.

Preferably a DC path is provided between said first terminal and said second terminal of said primary side, respectively, and ground. Such a DC path helps to prevent charge build-up capacities at the terminals of the primary side. The two DC paths can have a symmetrical design towards ground.

Preferably said secondary side is connected to a Flip-Flop arrangement. A Flip-Flop arrangement is a simple way to restore the original pulse train signal.

Preferably said Flip-Flop arrangement comprises a Schmitt-trigger Flip-Flop. Due to the hysteresis of the Schmitt-trigger Flip-Flop, a wider portion of the pulses are used, and hence narrower pulses with less transferred energy can be utilized.

In a preferred embodiment said secondary side comprises a first secondary terminal and a second secondary terminal, said first secondary terminal and said second secondary terminal being connected to a secondary ground potential via a capacitor arrangement. A capacitor arrangement, for example a condenser at each of the terminals of the secondary side, ties the terminals to the secondary ground potential to improve EMC performance.

Alternatively or additionally said secondary side comprises a secondary midpoint connected to a secondary supply voltage potential. This as well improves EMC performance.

In a preferred embodiment said metering section is battery powered. Since only low energy is used for transmitting the information from the metering section to the outside, a battery is sufficient for energy supply.

In a preferred embodiment said transformer is implemented as copper track coils on separate layers of a substrate. The substrate can be, for example, a printed circuit board. In this way the transformer is implemented as a PCB-track transformer allowing for an efficient utilization of the PCB copper layers. Preferred embodiments of the invention will now be described in more detail with reference to the drawing, wherein:
- Fig. 1: shows a schematic illustration of a utility meter,
- Fig. 2: shows a more detailed illustration of the utility meter,
- Fig. 3: shows a first embodiment of a communication path,
- Fig. 4: shows signal wave forms at various points of the circuits shown in Fig. 3,
- Fig. 5: shows a second embodiment of the communication path,
- Fig. 6: shows a third embodiment of the communication path, and
- Fig. 7: shows a fourth embodiment of the communication path.

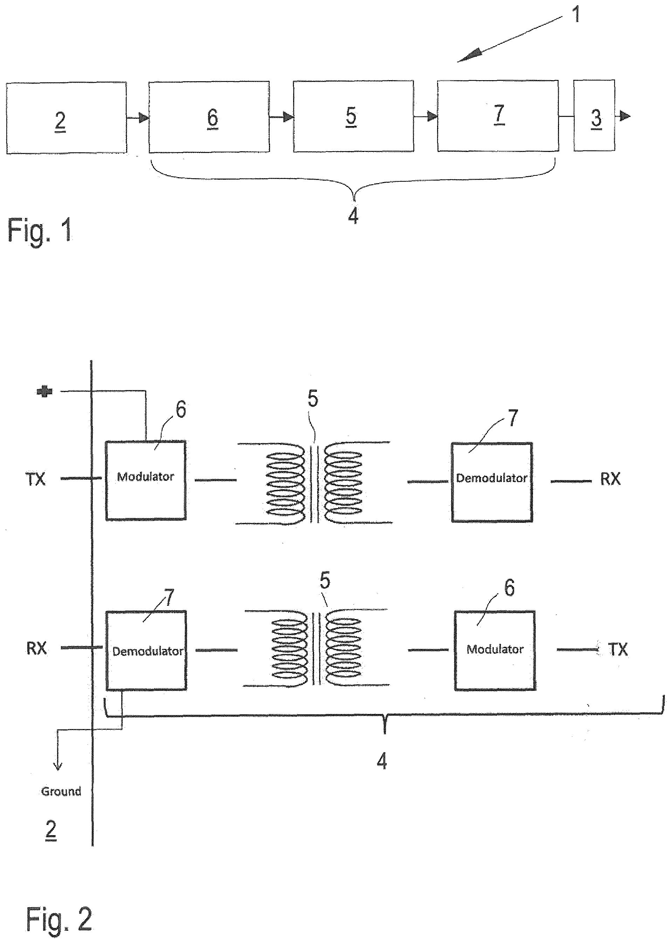

Fig. 1 schematically shows a utility meter 1 comprising a metering section 2 and a communication path 4 between the metering section 2 and the communication interface 3. The communication path 4 provides a galvanic isolation between the metering section 2 and the communication interface 3.

The metering section 2 is battery powered so that the energy consumption of the metering section 2 should be kept low. The requirement of low energy consumption is valid also for the transmission of data from the metering section 2 to the communication interface 3. The communication interface 3 itself could be provided with either its own battery or a power supply via, for example, a bus, for example an M-bus.

The communication path 4 comprises a transformer 5, a modulator 6 and a demodulator 7.

Fig. 2 shows the communication path 4 in more detail. Output can be derived from ground, plus, TX of the metering section 2 or the heat meter. The communication module 4 is operated with either its own battery or power supply via, for example, M-bus. The communication path 4 comprises two communication routes each having a modulator 6, a transformer 5 and a demodulator 7, however, the two communication routes are arranged in reverse direction so that it is possible to both transmit and receive data to and from the metering section 2.

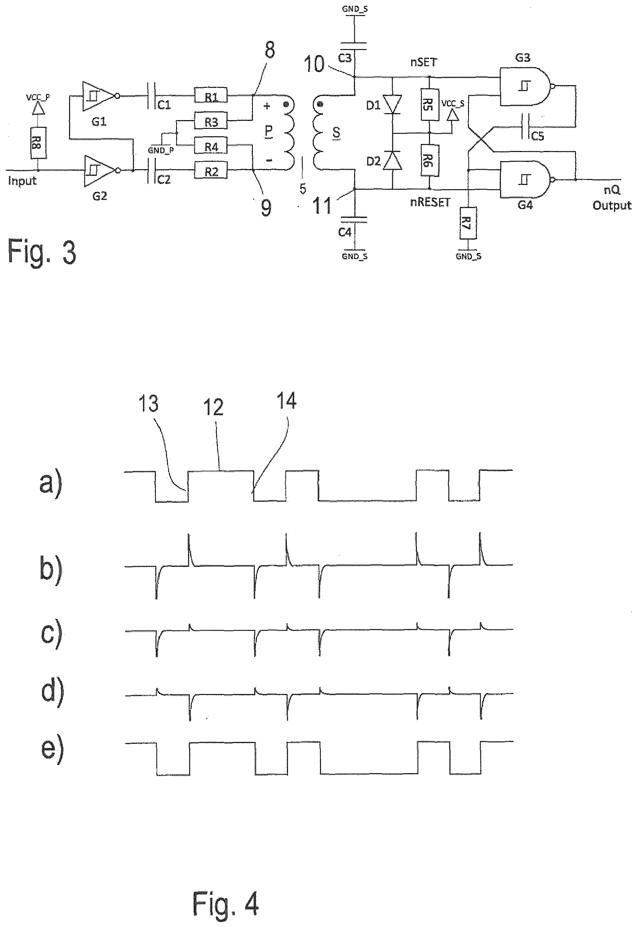

Fig. 3 shows a first embodiment of the communication path 4.

In Fig. 3 the transformer 5 is a transformer having a primary side P and a secondary side S. The transformer 5 has a first primary terminal 8 and a second primary terminal 9 on the primary side P. Furthermore, the transformer 5 comprises a first secondary terminal 10 and a second secondary terminal 11 on the secondary side S. The modulator 6 connected to the primary side P of transformer 5 comprises an inverter arrangement G1, G2. Inverter G2 is connected to input, e.g. to the metering section 2. A resistance R8 is used to pull up the input of inverter G2 in the case where the output driving of inverter G2 is "tri-stated". The output of inverter G2 is connected to the second primary terminal of the primary side P of transformer 5 and furthermore to an input of the other inverter G1, the output of which is connected to the first primary terminal 8 of transformer 5.

In each connection between the output of the respective inverters G1, G2 and the primary terminals 8, 9 a capacitance C1, C2 and a resistance R1, R2 is shown. The capacitances C1, C2 and the primary inductance of transformer 5 determine the amount of energy transferred per bit and the resistances R1, R2 provide the necessary damping of the resonant circuit made up by the capacitances C1, C2 and the primary inductance. The relation between R1, R2, C1, C2 and the primary inductance thus determines the pulse width and amplitude of the pulses transferred through the transformer 5.

The implementation of the complementary input drivers with inverters G1, G2 as shown in Fig. 3 is just one of many possible ways of implementing the drivers. Another possibility would e.g. be using 2-input XOR gates - implemented in various other ways.

The primary terminals 8, 9 are connected to a primary ground potential GND_P to prevent charge-up on the capacitances C1, C2. The connection between the primary terminals 8, 9 and a primary ground potential GND_P can be made by two equal resistors R3, R4 to achieve a symmetrical design.

As mentioned above, the input signal is set to the inverters G1, G2, which provide complementary drive signals for the transformer 5 to double the drive voltage for the transformer 5.

The capacitances C1, C2 and the resistances R1-R4 form an input circuit for the primary side of transformer 5. It can be seen that this input circuit is of fully symmetrical design. Such a symmetrical design promotes immunity towards common mode EMC (Electromagnetic compatibility) interference.

The first secondary terminal 10 on the second side S is connected to a first Flip-Flop gate G3. The second secondary terminal 11 of the secondary side S of the transformer is connected to a second Flip-Flop gate G4. Terminal 10 is connected to a secondary supply voltage VCC _S via a first diode D1 and a resistance R5 connected in parallel to each other. The other terminal 11 is connected to the secondary supply voltage VCC_S via a second diode D2 and a resistance R6 connected in parallel to each other. Furthermore, the first terminal 10 is connected to a secondary ground potential GND_S via a capacitor C3 and the second terminal 11 is connected to the secondary ground potential GNG_S via another capacitor C4.

The output of the second Flip-Flop gate G4 is connected to a second input of the first Flip-Flop gate G3. The output of the first Flip-Flop gate G3 is connected via a capacitance C5 to a second input of the second Flip-Flop gate G4. Furthermore, this second input is connected to the secondary ground potential GND_S via a resistance R7.

The resistance R7 and the capacitance C5 provides power-on reset and reset in case the Flip-Flop G3, G4 unintentionally end up in the wrong state. The resistances R5, R6 between the terminals 10, 11 and the secondary supply voltage VCC_S provides pull-up for the Flip-Flop.

The diodes D1, D2 are used for clamping positive going pulses on either transformer terminals 10, 11 to the secondary supply voltage VCC_S. In the embodiment shown in Fig. 3 this causes the opposite terminal to generate negative going edges for triggering the SR-Flip-Flop built around the Flip-Flop G3, G4. The RS-Flip-Flops restores the original signal from the negative going SET/RESET pulses on the respective inputs. It is advantageous to use a Schmitt-trigger Flip-Flop. Due to the hysteresis of the Schmitt-trigger Flip-Flop a wider portion of the pulses can be used, and hence narrower pulses with less transferred energy can be utilized.

Fig. 4 shows signal wave forms at various points of the circuit shown in Fig. 2.

Fig. 4a shows the wave form at the input. This wave form is a sequence of pulses 12, each pulse having a rising edge 13 and a falling edge 14.

Fig. 4b shows the signal wave form at first primary terminal 8 of transformer 5. It can be seen that a rising edge 13 of the signal of Fig. 4a produces a positive peak and a falling edge 14 produces a negative peak.

Fig. 4c shows the wave form of the signal on the line nSET between the first secondary terminal 10 and the first Flip-Flop gate G3 and Fig. 4d shows the wave form on the line nRESET between the second secondary terminal 11 and the second Flip-Flop gate G4. Fig. 4e shows the output nQ.

It can easily be seen that the wave forms in Fig. 4a and 4e are identical.

In the embodiment shown in Fig. 3 the capacitances C3, C4, the diode D1, D2 and the resistances R5, R6 form an output modulator circuit which is of fully symmetrical design. This as well promotes immunity towards common mode EMC interference.

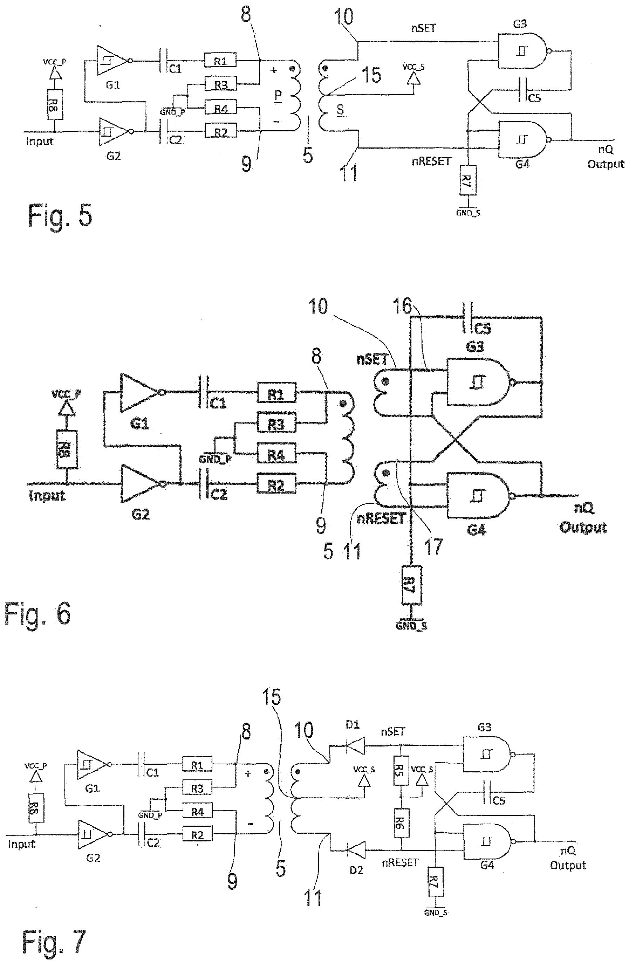

Fig. 5 shows a second embodiment of the communication path 4 of Fig. 1.

In this case the transformer 5 is a transformer having a dual secondary winding. The primary side P is identical to that of the embodiment shown in Fig. 3.

The secondary side S, however, has a secondary midpoint 15 connected to the secondary supply voltage VCC_S.

The secondary terminals 10, 11 are connected to a Schmitt-trigger Flip-Flop G3, G4 (or other Flip-Flop) in the same way as in Fig. 3.

Fig. 6 shows a circuit similar to that of Fig. 5. However, the secondary side of transformer 5 is split into separate windings. The split midpoint terminals 16, 17 of these windings are connected to the Flip-Flop Q and nQ outputs. These active pull-up/pull-down connections have the advantage that voltages above Vdd are avoided.

If the transformer is implemented at PCB-track transformer, i.e. copper track coils on separate layers of a substrate, like a PCB, it furthermore allows for an efficient utilization of the PCB copper layers.

Fig. 7 shows a fourth embodiment of a communication path.

The primary side of transformer 5 is the same as in the embodiment of Fig. 3, 5, and 6.

The secondary side of transformer 5 has a dual secondary winding with a secondary midpoint 15 connected to the secondary supply voltage VCC_S.

The first secondary terminal 10 is connected to one input nSET of the first Flip-Flop gate G3 via a diode D1 which is arranged in reverse direction blocking a current from the first secondary terminal 10 to the Flip-Flop gate G3.

The second secondary terminal 11 is connected to an input nRESET of the other Flip-Flop gate G4 via as diode D2 which is again arranged in reverse direction blocking a current from the second secondary terminal 11 to the Flip-Flop gate G4. Both inputs nSET, nRESET are connected to the secondary supply voltage VCC_S via equal resistors R5, R6.

The transformer 5 can be implemented in connection with an extra module which can be attached or connected to the heat meter or utility meter. With the attached communication module on the utility meter a very fast data transfer from the utility meter to the communication module can be used with the aid of the transformer. In this case the heat meter power is only used in very little time and the data is then transferred to the communication module and this communication module has either its own power supply or is powered by the attached bus connection.

Thereby, it is possible to transfer the data very fast from the battery driven apparatus (to limit the power consumption) and the transferred data is then transferred from the module (which is operated with its own power supply or is powered from the outside) to "outside" the metering section 2 with a slower transfer speed.

Each of the embodiments shows a low energy consumption per bit, virtually independent on the communication speed. In both embodiments a wide range of communication speeds are supported: from virtually 0 bit/s to several Mbits/S - depending on implementation. No performance degradation over time occurs, as may be the case with opto couplers. There is the possibility of achieving a very high common mode impedance and a very low capacitive coupling at a low price.

## Claims

1. Utility meter (1) comprising a metering section (2), a communication interface (3), and a communication path (4) providing a galvanic isolation between said metering section (2) and said communication interface (3), wherein said communication path (4) comprises a transformer (5) having a primary side (P) with a first primary terminal (8) and a second primary terminal (9) connected to said metering section (2) and a secondary side (S) connected to said communication interface (3), **characterized in that** means in form of an inverter arrangement connected to the primary side (P) are provided supplying complementary signals to said transformer (5).

2. Utility meter according to claim 1, **characterized in that** said primary side (P) is connected to said metering section (2) by means of an input modulator circuit (C1, C2, R1, R2, R3, R4) having a symmetrical design.

3. Utility meter according to claim 1 or 2, **characterized in that** said secondary side (S) is connected to said communication interface (3) by means of an output modulator circuit (D1, D2, R5, R6) having a symmetrical design.

4. Utility meter according to any of claims 1 to 3, **characterized in that** said inverter arrangement (G1, G2) comprises a first inverter (G2) connected to said second terminal (7) of said primary side (P) and to an input of a second inverter (G1) which is connected to said first terminal (6) of said primary side (P).

5. Utility meter according to any of claims 1 to 4, **characterized in that** a DC path (R3, R4) is provided between said first terminal (6) and said second terminal (7), respectively, and ground of said primary side (P).

6. Utility meter according to any of claims 1 to 5, **characterized in that** said secondary side (S) is connected to a Flip-Flop arrangement (G3, G4).

7. Utility meter according to claim 6, **characterized in that** said Flip-Flop arrangement (G3, G4) comprises a Schmitt-trigger Flip-Flop.

8. Utility meter according to any of claims 1 to 7, **characterized in that** said secondary side (S) comprises a first secondary terminal (8) and a second secondary terminal (9), said first secondary terminal (8) and said second secondary terminal (9) being connected to a secondary ground potential (GND_S) via a condenser arrangement (C3, C4).

9. Utility meter according to any of claims 1 to 8, **characterized in that** said secondary side (S) comprises a secondary midpoint (13) connected to a secondary supply voltage potential (VCC_S).

10. Utility meter according to any of claims 1 to 9, **characterized in that** said metering section (2) is battery powered.

11. Utility meter according to any of claims 1 to 10, **characterized in that** said transformer (5) is implemented as copper track coils on separate layers of a substrate.

## Patentansprüche

1. Verbrauchszähler (1), einen Messabschnitt (2), eine Kommunikationsschnittstelle (3) und einen Kommunikationspfad (4) umfassend, der eine galvanische Isolierung zwischen dem Messabschnitt (2) und der Kommunikationsschnittstelle (3) bereitstellt,
wobei der Kommunikationspfad (4) einen Transformator (5) umfasst, der eine Primärseite (P) mit einem ersten Primäranschluss (8) und einem zweiten Primäranschluss (9) aufweist, die mit dem Messabschnitt (2) verbunden ist, und eine Sekundärseite (S), die mit der Kommunikationsschnittstelle (3) verbunden ist,
**dadurch gekennzeichnet, dass** Mittel in Form einer mit der Primärseite (P) verbundenen Wechselrichteranordnung bereitgestellt werden, um den Transformator (5) mit Komplementärsignalen zu versorgen.

2. Verbrauchszähler gemäß Anspruch 1,
**dadurch gekennzeichnet, dass** die Primärseite (P) mittels einer Eingangsmodulatorschaltung (C1, C2, R1, R2, R3, R4), die ein symmetrisches Design hat, mit dem Messabschnitt (2) verbunden ist.

3. Verbrauchszähler gemäß Anspruch 1 oder 2,
**dadurch gekennzeichnet, dass** die Sekundärseite (S) mittels einer Ausgangsmodulatorschaltung (D1, D2, R5, R6), die ein symmetrisches Design hat, mit der Kommunikationsschnittstelle (3) verbunden ist.

4. Verbrauchszähler gemäß einem der Ansprüche 1 bis 3,
**dadurch gekennzeichnet, dass** die Wechselrichteranordnung (G1, G2) einen ersten Wechselrichter (G2) umfasst, der mit dem zweiten Anschluss (7) der Primärseite (P) und mit einem Eingang eines zweiten Wechselrichters (G1) verbunden ist, der mit dem ersten Anschluss (6) der Primärseite (P) verbunden ist.

5. Verbrauchszähler gemäß einem der Ansprüche 1 bis 4,
**dadurch gekennzeichnet, dass** ein Gleichstrompfad (R3, R4) jeweils zwischen dem ersten Anschluss (6) und dem zweiten Anschluss (7) und der Erde der Primärseite (P) bereitgestellt wird.

6. Verbrauchszähler gemäß einem der Ansprüche 1 bis 5,
**dadurch gekennzeichnet, dass** die Sekundärseite (S) mit einer Flip-Flop-Anordnung (G3, G4) verbunden ist.

7. Verbrauchszähler gemäß Anspruch 6,
**dadurch gekennzeichnet, dass** die Flip-Flop-Anordnung (G3, G4) einen Schmitt-Trigger-Flip-Flop umfasst.

8. Verbrauchszähler gemäß einem der Ansprüche 1 bis 7,
**dadurch gekennzeichnet, dass** die Sekundärseite (S) einen ersten Sekundäranschluss (8) und einen zweiten Sekundäranschluss (9) umfasst, wobei der erste Sekundäranschluss (8) und der zweite Sekundäranschluss (9) über eine Kondensatoranordnung (C3, C4) mit einem sekundären Massepotential (GND_S) verbunden sind.

9. Verbrauchszähler gemäß einem der Ansprüche 1 bis 8,
**dadurch gekennzeichnet, dass** die Sekundärseite (S) einen sekundären Mittelpunkt (13) umfasst, der mit einem sekundären Versorgungsspannungspotential (VCC_S) verbunden ist.

10. Verbrauchszähler gemäß einem der Ansprüche 1 bis 9,
**dadurch gekennzeichnet, dass** der Messabschnitt (2) batteriegespeist ist.

11. Verbrauchszähler gemäß einem der Ansprüche 1 bis 10,
**dadurch gekennzeichnet, dass** der Transformator (5) als Kupferbahnspulen auf getrennten Schichten eines Substrats implementiert ist.

## Revendications

1. Compteur (1) comprenant une section de mesure (2), une interface de communication (3) et un trajet de communication (4) fournissant une isolation galvanique entre ladite section de mesure (2) et ladite interface de communication (3), dans lequel ledit trajet de communication (4) comprend un transformateur (5) possédant un côté primaire (P) équipé d'une première borne primaire (8) et d'une seconde borne primaire (9) connecté à ladite section de mesure (2) et un côté secondaire (S) connecté à ladite interface de communication (3), **caractérisé en ce que** des moyens ayant la forme d'un agencement d'onduleur connecté au côté primaire (P) sont prévus alimenter des signaux complémentaires vers ledit transformateur (5).

2. Compteur selon la revendication 1, **caractérisé en ce que** ledit côté primaire (P) est connecté à ladite section de mesure (2) au moyen d'un circuit de modulateur d'entrée (C1, C2, R1, R2, R3, R4) ayant une conception symétrique.

3. Compteur selon la revendication 1 ou 2, **caractérisé en ce que** ledit côté secondaire (S) est connecté à ladite interface de communication (3) au moyen d'un circuit de modulateur de sortie (D1, D2, R5, R6) ayant une conception symétrique.

4. Compteur selon l'une quelconque des revendications 1 à 3, **caractérisé en ce que** ledit agencement d'onduleur (G1, G2) comprend un premier onduleur (G2) connecté à ladite seconde borne (7) dudit côté primaire (P) et à une entrée d'un second onduleur (G1) qui est connecté à ladite première borne (6) dudit côté primaire (P).

5. Compteur selon l'une quelconque des revendications 1 à 4, **caractérisé en ce qu'**un trajet de courant continu (R3, R4) est prévu entre ladite première borne (6) et ladite seconde borne (7), respectivement, et la terre dudit côté primaire (P).

6. Compteur selon l'une quelconque des revendications 1 à 5, **caractérisé en ce que** ledit côté secondaire (S) est connecté à un agencement à bascule (G3, G4).

7. Compteur selon la revendication 6, **caractérisé en ce que** ledit agencement à bascule (G3, G4) comprend une bascule de Schmitt.

8. Compteur selon l'une quelconque des revendications 1 à 7, **caractérisé en ce que** ledit côté secondaire (S) comprend une première borne secondaire (8) et une seconde borne secondaire (9), ladite première borne secondaire (8) et ladite seconde borne secondaire (9) étant connectées à un potentiel de terre secondaire (GND_S) par l'intermédiaire d'un agencement de condenseur (C3, C4).

9. Compteur selon l'une quelconque des revendications 1 à 8, **caractérisé en ce que** ledit côté secondaire (S) comprend un point médian secondaire (13) connecté à un potentiel de tension d'alimentation secondaire (VCC_S).

10. Compteur selon l'une quelconque des revendications 1 à 9, **caractérisé en ce que** ladite section de mesure (2) est alimentée par batterie.

11. Compteur selon l'une quelconque des revendications 1 à 10, **caractérisé en ce que** ledit transformateur (5) est mis en œuvre sous la forme de bobines de traces en cuivre sur des couches séparées d'un substrat.
